# FASCICULE DE BREVET EUROPEEN

(11) **EP 1 692 475 B1**
(45) Date de publication et mention de la délivrance du brevet: **09.06.2010**
(21) Numéro de dépôt: 04816513.8
(22) Date de dépôt: 06.12.2004
(51) Int. Cl.: G01J 5/20

(54) **DISPOSITIF DE MESURE D ENERGIE RAYONNANTE AMELIORE A DEUX POSITIONS**
VERBESSERTE STRAHLUNGSENERGIEMESSEINRICHTUNG MIT ZWEI POSITIONEN
IMPROVED RADIANT-ENERGY-MEASURING DEVICE WITH TWO POSITIONS

(30) Priorité: 08.12.2003 FR 0351000
(43) Date de publication de la demande: 23.08.2006
(73) Titulaire: Commissariat à l'énergie atomique et aux énergies alternatives, 75015 Paris (FR)
(72) Inventeur: MASSONI, Nicolas, F-38000 Grenoble (FR); OUVRIER-BUFFET, Jean-Louis, F-74320 Sevrier (FR); PEREZ, André, F-38170 Cordeac (FR)
(74) Mandataire: Poulin, Gérard
(86) Numéro de dépôt international: PCT/FR2004/050659
(87) Numéro de publication internationale: WO 2005/057148

(56) Documents cités:
- EP-A- 0 566 156
- EP-A- 0 828 145
- WO-A-01/81879
- US-A- 4 695 715

## Description

### DOMAINE TECHNIQUE

L'invention concerne les dispositifs de détection de rayonnements électromagnétiques, en particulier ceux basés sur le principe de la détection thermique tels que les bolomètres ou micro-bolomètres.

### ETAT DE LA TECHNIQUE ANTERIEURE

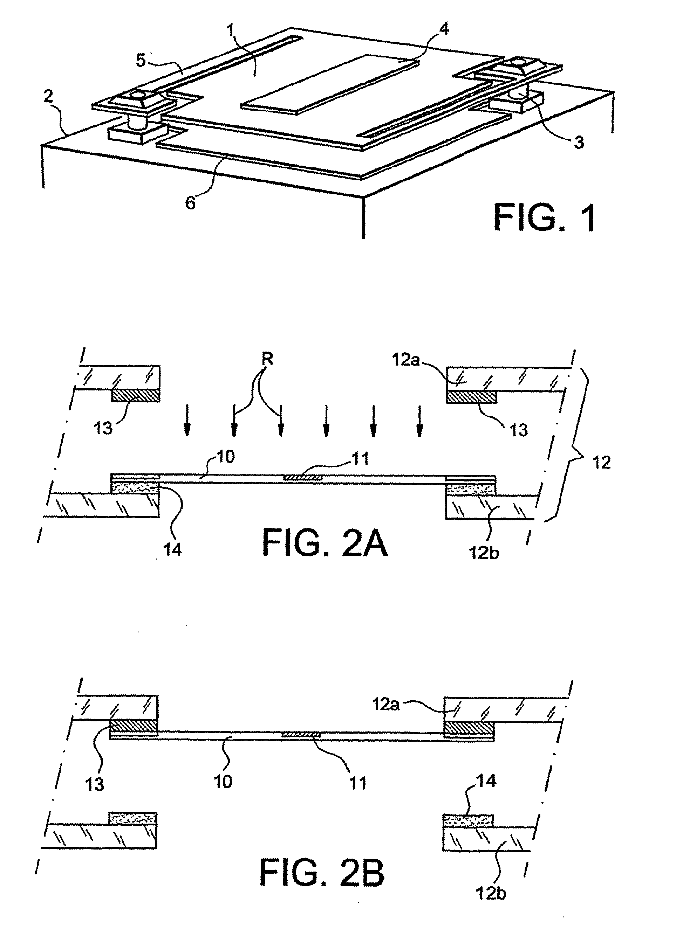

La figure 1 représente un dispositif de détection de rayonnements électromagnétiques selon l'art antérieur. Ce dispositif comprend tout d'abord une fine membrane 1 absorbante vis-à-vis de rayonnements électromagnétiques incidents. Cette membrane 1 est suspendue au-dessus d'un support 2 par l'intermédiaire de points d'ancrage 3. Sous l'effet d'un rayonnement électromagnétique, la membrane est susceptible de s'échauffer et de transmettre sa température à une couche 4, généralement mince, qui est déposée sur la membrane 1 et qui peut jouer le rôle d'un thermomètre. Cette couche 4 peut être semi-conductrice et comprendre par exemple un ou plusieurs thermistors permettant de transformer une énergie rayonnante en un signal électrique de mesure.

Le support 2 peut être un substrat semi-conducteur, par exemple en silicium et peut comprendre un ou plusieurs circuits électroniques intégrés de traitement comportant par exemple des moyens de polarisation de la couche 4 et des moyens de lecture (non représentés sur la figure) du thermomètre. Ce substrat 2 peut également comprendre un ou plusieurs composants de multiplexage qui permettent de mettre en série les signaux électriques mesurés issus par exemple de différents thermistors et de transmettre ces signaux vers un nombre réduit de sorties qui pourront être exploitées par exemple par un système d'imagerie. Le dispositif détecteur peut comprendre en outre un dispositif d'isolation thermique 5 permettant de limiter les pertes thermiques de la membrane et d'améliorer ainsi la sensibilité du dispositif détecteur. Une couche 6 réfléchissant les rayonnements électromagnétiques est placée sur le substrat 2. La distance entre cette couche 6 et la membrane 1 est dictée par la hauteur des points d'ancrage 3. Cette distance est de préférence égale au quart de la longueur d'onde détectée afin de créer une cavité quart d'onde permettant d'augmenter l'absorption de la membrane.

Les moyens d'isolation thermique 5 se présentent sous forme de pièces oblongues rattachées à la membrane 1. Ces pièces présentent une longueur de préférence la plus élevée possible ainsi qu'une section (produit de la largeur par l'épaisseur) la plus faible possible. Outre leur rôle d'isolation thermique, ces pièces oblongues permettent par ailleurs la suspension de la membrane 1 et son maintien mécanique au-dessus du substrat 2. Ces pièces peuvent par ailleurs supporter une couche conductrice d'électricité reliant des bornes des thermistors à des entrées des moyens de lecture ou des moyens de polarisation précédemment décrit.

Afin par exemple de coupler un détecteur tel que celui précédemment décrit, avec des systèmes d'imagerie, on souhaite pouvoir améliorer notamment sa sensibilité ainsi que son temps de réponse.

Pour améliorer sa sensibilité on essaie de réduire la conductance thermique des pièces oblongues 5, par exemple en rendant leur longueur la plus élevée possible et en rendant leur section la plus faible possible.

Cependant, la tenue mécanique de la membrane suspendue peut être affectée par ces modifications. En effet, cette opération peut se traduire par un fléchissement des pièces oblongues 5 qui peuvent entraîner un basculement de la membrane absorbante pouvant aller jusqu'au contact avec le substrat 2. Le fléchissement de la membrane est à proscrire pour maintenir une bonne isolation thermique de cette dernière.

En ce qui concerne l'amélioration du temps de réponse du détecteur, une méthode peut consister à rendre la résistance thermique des pièces oblongues, ainsi que la capacité calorifique de la membrane les plus faibles possible. Ces paramètres sont généralement dépendants de l'épaisseur de la membrane. Ainsi, une voie d'amélioration du temps de réponse peut être de diminuer l'épaisseur de la membrane. Mais cette diminution peut avoir pour effet de générer du bruit thermique supplémentaire venant perturber le détecteur.

De manière plus générale, les détecteurs selon l'art antérieur présentent une sensibilité affectée notamment par des fuites thermiques provenant de leurs interconnexions électriques. De plus, leur temps de réponse est encore trop limité. Les documents US 2003/0141453, WO 01/81879 et US 4695715 divulguent des détecteurs bolométriques suivant l'art antérieur.

### EXPOSÉ DE L'INVENTION

La présente invention propose un dispositif de mesure ou de détection d'énergie rayonnante amélioré par rapport aux dispositifs suivant l'art antérieur, notamment en termes de sensibilité de détection et de temps de réponse.

Elle concerne un dispositif de mesure d'énergie rayonnante comprenant les caractéristiques de la revendication 1.

Autres examples concernent également un dispositif de mesure d'énergie rayonnante comprenant :
- un support comportant des premiers moyens permettant d'absorber une énergie rayonnante et des seconds moyens permettant de fournir un ou plusieurs signaux électriques en fonction de l'énergie rayonnante absorbée,
- un substrat comportant des moyens de lecture desdits signaux électriques, lesdits premiers moyens étant mobiles par rapport aux moyens de lecture.

Les premiers moyens peuvent être formés d'au moins une membrane ou couche permettant d'absorber des rayons électromagnétiques. Les seconds moyens peuvent être formés par exemple d'au moins une couche semi-conductrice à laquelle la membrane est susceptible de transmettre l'énergie rayonnante absorbée. La couche semi-conductrice peut être accolée ou intégrée à la membrane. Les premiers et seconds moyens sont de préférence intégrés à un même support. Les seconds moyens peuvent produire un ou plusieurs signaux électriques en fonction de l'énergie rayonnante transmise. Ils peuvent comprendre un ou plusieurs thermistors, réalisés par exemple dans ladite couche semi-conductrice.

Par « substrat », on entend un objet jouant le rôle d'un support aux moyens de lecture. Selon une caractéristique particulière du dispositif, le substrat peut être semi-conducteur. Mais l'invention n'est cependant pas limitée à des dispositifs microélectroniques.

Le substrat peut comprendre un ou plusieurs circuits intégrés reliés, par exemple, aux moyens de lecture et permettant de traiter lesdits signaux électriques. Ces circuits peuvent comprendre par exemple un multiplexeur permettant de mettre en série des signaux électriques provenant de différents thermistors intégrés aux seconds moyens. Le substrat peut également comprendre un ou plusieurs circuits permettant de polariser les seconds moyens.

Par « moyens de lecture », on entend des plots conducteurs ou de zones conductrices du substrat susceptibles d'entrer en contact avec d'autres zones conductrices du support véhiculant lesdits signaux électriques de mesure.

Dans les dispositifs de détection suivant l'art antérieur, comme celui illustré à la figure 1 et décrit précédemment, le support était fixe par rapport au substrat et ne pouvait adopter qu'une unique position.

Le dispositif suivant l'invention peut adopter des positions différentes suivant qu'il se trouve dans une phase au cours de laquelle il détecte ou mesure une énergie rayonnante ou dans une phase au cours de laquelle il effectue la lecture de cette mesure.

Durant une phase de mesure ou d'acquisition, les premiers moyens doivent pouvoir s'échauffer tout en limitant les pertes thermiques. Le dispositif de détection peut alors adopter une première position dans laquelle les premiers moyens sont isolés au maximum d'un point de vue thermique. Dans cette position, on essaie de limiter les fuites thermiques induites par exemple par des connexions électriques. On améliore ainsi la sensibilité du dispositif de détection.

Lors d'une phase de lecture de la mesure, les moyens de lecture sont en contact avec des zones conductrices du support et font l'acquisition ou la lecture desdits signaux électriques produits par lesdits seconds moyens. Dans le même temps, les premiers moyens se refroidissent. Le dispositif suivant l'invention peut alors adopter, lors de cette phase, une seconde position dans laquelle les premiers moyens sont placés cette fois dans une position de faible isolement thermique. La vitesse de refroidissement des premiers moyens est ainsi améliorée par rapport aux dispositifs de l'art antérieur et le temps de réponse du dispositif suivant l'invention est plus rapide.

Outre l'amélioration de la vitesse et de la sensibilité du détecteur, le passage d'une position d'important isolement thermique à une position de faible isolement thermique, peut permettre aux premiers moyens absorbants d'être protégés en cas de surchauffe.

En effet, lorsque par exemple une membrane absorbante est exposée à un rayonnement électromagnétique trop intense, le dispositif suivant l'invention peut permettre de faire passer subitement la membrane absorbante de la position d'importante isolation thermique à la position de faible isolation thermique. Le risque d'endommagement de cette membrane suite à une éventuelle surchauffe, est de cette manière, réduit.

Le passage de la position d'important isolement thermique à la position de faible isolement thermique peut être réalisé de plusieurs façons. Ce passage peut être effectué par exemple par le déplacement du support par rapport aux moyens de lecture.

Selon un mode de réalisation, ce sont lesdits premiers moyens qui peuvent se déplacer. Dans ce cas, selon une première variante les moyens de lecture peuvent également se déplacer. Selon une seconde variante, les moyens de lecture restent fixes.

Selon une caractéristique particulière du dispositif de détection suivant l'invention, celui-ci peut adopter une position, dans laquelle les seconds moyens ne sont pas reliés électriquement aux moyens de lecture. Cette position peut être adoptée par le dispositif, lorsqu'il effectue une détection, pour limiter les fuites thermiques.

Lors d'une phase de détection, le dispositif suivant l'invention peut également adopter une position au cours de laquelle le substrat et le support sont connectés ou rattachés uniquement par l'intermédiaire de zones isolantes. Par « zones isolantes », on entend par exemple, des plots isolants situés sur le support, ou/et sur le substrat. Les zones isolantes peuvent être également, par exemple, des moyens de suspension isolants permettant de rattacher le support et le substrat tout en maintenant l'un à distance de l'autre. Les plots isolants ou les dispositifs de suspension isolants sont de préférence réalisées à base d'un matériau de très haute isolation thermique tel qu'un polymère, une résine, un aérogel, un matériau diélectrique de faible constante diélectrique(« low-k »).

Lorsque le substrat et le support sont indépendants, lors d'une phase d'échauffement des premiers moyens absorbants, le dispositif suivant l'invention est susceptible d'adopter une position dans laquelle le support n'est ni rattaché ni en contact avec le substrat. Ainsi, le support peut être maintenu en lévitation par rapport au substrat, par exemple grâce à des forces électromagnétiques ou électrostatiques. Ces forces peuvent être produites par des moyens d'actionnement telles que des électrodes situés sur le support ou/et sur le substrat.

Le dispositif de détection d'énergie rayonnante suivant l'invention est susceptible d'adopter une autre position dans laquelle les seconds moyens sont reliés électriquement avec les moyens de lecture. Cette autre position peut être adoptée par le détecteur lors d'une phase de lecture pour permettre par exemple à un ou plusieurs circuits intégrés au substrat de faire l'acquisition de signaux électriques de mesure. Cette position peut également permettre une polarisation des seconds moyens. Elle permet en outre aux premiers moyens absorbants de se refroidir rapidement.

Les moyens de lecture sont de préférence réalisés à base d'un matériau de faible résistance thermique, pour mettre aux premiers moyens absorbants de se refroidir le plus rapidement possible.

Lors d'une phase de lecture de mesure, le dispositif suivant l'invention peut adopter une position dans laquelle des zones conductrices du support véhiculant par exemple des signaux électriques de mesure sont en contact avec d'autres zones conductrices du substrat. Ces autres zones conductrices du substrat peuvent comprendre les moyens de lecture sous forme de plots conducteurs. Certaines de ces zones conductrices du substrat peuvent comprendre en outre des zones de faible résistance thermique, en supplément des moyens de lecture. Les zones supplémentaires, servent alors, en cas de contact avec les premiers moyens, à refroidir ces derniers encore plus rapidement.

Dans le dispositif de détection d'énergie rayonnante selon l'invention, le substrat et le support peuvent être ou non rattachés.

Dans le cas où le support et le substrat sont indépendants, le passage, pour les premiers moyens, d'une position d'important isolement thermique à une position de faible isolement thermique peut être, de manière rapide et sans contact.

Pour faire déplacer les moyens de lecture par rapport aux premiers moyens absorbant, le dispositif de détection suivant l'invention peut comprendre en outre des moyens d'actionnement. Ces moyens d' actionnement peuvent servir également à maintenir le dispositif dans une position de mesure ou dans une position de lecture.

Les moyens d'actionnement peuvent, selon une première variante, permettre de déplacer le support. Selon une seconde variante, ils peuvent permettre de déplacer les moyens de lecture. Ils peuvent également permettre de déplacer le support et les moyens de lecture.

Les moyens d'actionnement peuvent être de nature thermomécanique, ou piézoélectrique ou électromagnétique ou électrostatique. Ils peuvent être également une combinaison de moyens thermomécaniques ou/et piézoélectriques ou/et électromagnétiques ou/et électrostatiques.

Par exemple, dans le cas d'un actionnement électrostatique, ces moyens peuvent comprendre une ou plusieurs électrodes appartenant au support ou/et une ou plusieurs électrodes appartenant au substrat. Ces électrodes, suivant les potentiels auxquels elles sont réglées, pourront déplacer alors le support par rapport au substrat. Dans le cas, par exemple d'un actionnement piézoélectrique, les moyens de lecture peuvent être susceptibles de s'allonger pour entrer en contact avec le support

Le dispositif détecteur d'énergie rayonnante suivant l'invention peut être par exemple un bolomètre, ou un micro-bolomètre. Selon une caractéristique particulière de l'invention, il peut être réalisé par des procédés de réalisation en couches minces. Il peut par exemple se présenter sous forme d'un MEMS (MEMS pour microsystème électromécanique) ou être intégré à un MEMS.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels:
la figure 1 représente un dispositif détecteur d'énergie rayonnante selon l'art antérieur ;
la figure 2A représente une position que peut adopter un exemple de dispositif détecteur d'énergie rayonnante lorsqu'il est dans une phase de mesure d'un rayonnement électromagnétique ;
la figure 2B représente une position que peut adopter un exemple de dispositif détecteur d'énergie rayonnante, lorsqu'il est dans une phase de lecture de signaux électriques de mesure d'un rayonnement électromagnétique ;
la figure 3A représente un exemple de dispositif détecteur d'énergie rayonnante, par des moyens d'actionnement, dans une position de mesure ;
la figure 3B représente un exemple de dispositif détecteur d'énergie rayonnante maintenu, par des moyens d' actionnement, dans une position de lecture d'une mesure de rayonnement électromagnétique;
la figure 4 représente une comparaison des courbes de réponse en température d'un exemple de dispositif suivant l'art antérieur et d'un dispositif , lorsque tous deux sont soumis à des échauffements constants et répétés ;
les figures 5, 6 et 9 représentent différentes variantes de dispositifs détecteurs d'énergie rayonnante;
les figures 7A-7B, 8A-8B, représentent différentes variantes de dispositifs détecteurs d'énergie rayonnante selon l'invention.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

L'invention concerne un dispositif de détection de rayonnements électromagnétiques ou d'énergie rayonnante. Ce dispositif est susceptible d'adopter des positions différentes suivant qu'il se trouve dans une phase de détection ou de mesure d'une énergie rayonnante ou qu'il se trouve dans une phase de lecture de la mesure qu'il vient d'effectuer.

La figure 2A illustre un exemple de dispositif de détection. Ce dispositif est vu en coupe, lors d'une phase de détection au cours de laquelle il est soumis à des rayons électromagnétiques incidents R.

Le dispositif de détection comprend des premiers moyens absorbants vis-à-vis des rayons électromagnétiques sous forme d'une membrane 10. Sous l'effet des rayons électromagnétiques, la membrane 10 s'échauffe et transmet l'énergie rayonnante absorbée à des seconds moyens de conversion, permettant de convertir cette énergie rayonnante en un ou plusieurs signaux électriques de mesure. Ces seconds moyens prennent la forme d'une couche 11 accolée à la membrane 10. La membrane 10 peut être réalisée par exemple à base d'un matériau diélectrique tel que : SiO, SiO₂, SiN, Si₃N₄. La couche 11 peut elle être métallique ou semi-conductrice, et par exemple à base de silicium.

La membrane 10 est englobée au moins partiellement par un substrat 12 comportant une partie supérieure notée 12a située au-dessus de la membrane 10 ainsi qu'une partie inférieure 12b située au-dessous de la membrane 10. Le substrat 12 peut être semi-conducteur et par exemple à base de silicium. Il comprend des moyens de lecture permettant de faire l'acquisition desdits signaux électriques de mesure. Ces moyens de lecture prennent la forme de plots conducteurs 13 disposés sur sa partie supérieure 12a. Le substrat 12 peut également comporter un ou plusieurs circuits électroniques intégrés (non représentés) reliés à ces plots conducteurs 13 et permettant de traiter ces signaux électriques de mesure. Le substrat 12 peut comporter également un circuit permettant de polariser la couche 11 dans le cas où celle-ci est semi-conductrice. Il est doté par ailleurs de plots isolants 14 sur sa partie inférieure 12b.

Pendant la phase de détection, le dispositif adopte une position dans laquelle la membrane 10 repose sur les plots isolants 14 et n'est en contact qu'avec ces derniers. La membrane 10 se trouve dans une position d'isolation thermique, propice à un échauffement optimal. Les plots isolants 14 sont de préférence réalisés à base d'un matériau de résistance thermique élevée, tel que par exemple un polymère, une résine, ou un matériau diélectrique poreux.

Lorsque l'échauffement de la membrane est terminé, la température de cette dernière se stabilise à une valeur de détection traduite par la couche 11 en signaux électriques de mesure. La phase de détection peut alors s'achever. Le dispositif entre alors dans une phase de lecture de la mesure.

Il adopte alors une seconde position illustrée sur la figure 2B. Dans cette position, la membrane est cette fois plaquée contre les plots conducteurs 13 situés sur la partie supérieure du substrat 12a. Elle se trouve ainsi dans une position de faible isolation thermique.

Les plots conducteurs 13 constituent des moyens de lecture, permettant par exemple à un ou plusieurs circuits électroniques intégrés au substrat 12 de faire l'acquisition desdits signaux électriques de mesure. Cette lecture est généralement très brève et peut durer par exemple entre 1 et 50 µs. Dans le même temps que la lecture est effectuée, la membrane se refroidit. Le refroidissement est généralement plus long que la lecture, par exemple de l'ordre de 1 ms. Cependant il doit être de préférence le plus rapide possible pour que le dispositif de détection soit prêt de nouveau à réaliser une mesure.

Les plots conducteurs 13 ont une résistance thermique de préférence la plus faible possible pour permettre un refroidissement rapide de la membrane. Ils peuvent être réalisés à base d'un matériau tel qu'un matériau métallique comme par exemple le cuivre, l'aluminium, l'argent, le nickel, l'or.

Le dispositif de détection suivant l'invention peut ainsi adopter au moins une première position spécifique à une phase de mesure, c'est-à-dire lorsque la membrane s'échauffe et au moins une seconde position spécifique lors de la lecture de cette mesure.

Le passage de la première position à la seconde peut être réalisé grâce au déplacement relatif de la membrane et des moyens de lecture. Selon un mode de réalisation particulier de l'invention, la membrane peut se déplacer tandis que les moyens de lecture restent fixes. Selon un autre mode de réalisation, les moyens de lecture et la membrane peuvent tous deux se déplacer.

Le déplacement peut être effectué à l'aide de moyens d'actionnement situés par exemple sur le substrat et sur la membrane. Ces moyens d'actionnement (non représentés sur les figures 2A et 2B) peuvent être de nature électromagnétique ou électrostatique et permettre le déplacement de la membrane par le biais de forces électromagnétiques ou électrostatiques. Les moyens d'actionnement peuvent être également de nature piézoélectrique, ou thermomécanique et prendre par exemple la forme d'une ou plusieurs bilames.

Les moyens d'actionnement peuvent être choisis selon leurs performances en termes de consommation et de temps de réponse.

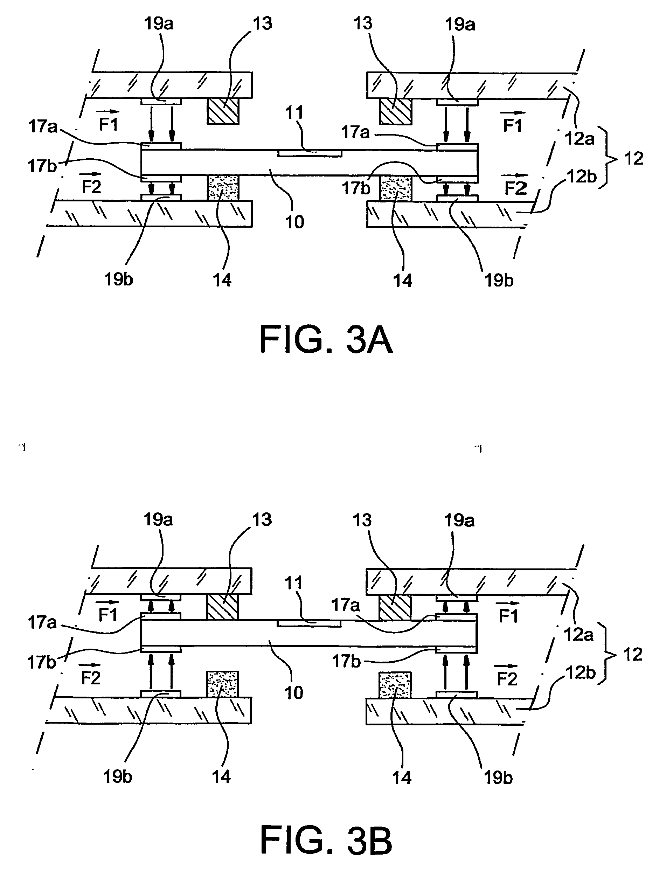

Les figure 3A et 3B illustrent un exemple de dispositif, du type de celui illustré sur les figure 2A et 2B, en ce que le substrat 12 ainsi que la membrane 10 sont dotés de moyens d'actionnement électrostatiques, permettant de déplacer cette dernière. Ces moyens d'actionnement prennent la forme d'électrodes, dont certaines notées 17a et 17b sont situées respectivement sur et sous la membrane 10. D'autres électrodes 19a et 19b sont situées respectivement sur la partie supérieure 12a et sur la partie inférieure 12b du substrat 12. Les électrodes, suivant les potentiels auxquels elles sont chacune fixées, permettent de créer des forces électrostatiques notées *̅F̅*̅₁ et *̅F̅*̅_{2.} Ces forces ont des intensités et des directions qui varient en fonction des potentiels auxquels elles sont chacune fixées. Les forces électrostatiques peuvent déplacer la membrane 10 mais aussi la maintenir dans une première position d'échauffement ou de mesure (figure 3A) ou dans une seconde position de lecture de la mesure ou de refroidissement de la membrane 10 (figure 3B).

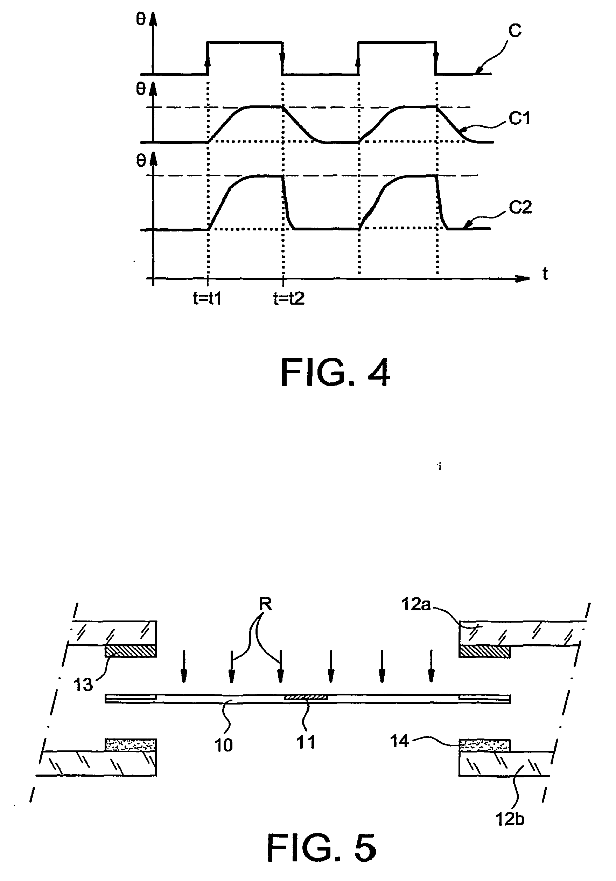

La figure 4 illustre des courbes C₁ et C₂ de réponses temporelles en température ⊖ respectivement d'un dispositif détecteur d'énergie rayonnante suivant l'art antérieur, comme celui illustré sur la figure 1 et d'un dispositif détecteur suivant l'invention. Ces dispositifs sont soumis périodiquement à une énergie rayonnante constante modélisée par une courbe C en créneaux.

Suite à un échauffement soudain survenant au temps t=t₁, le détecteur suivant l'art antérieur et le détecteur suivant l'invention répondent selon des constantes de temps différentes. L'échauffement est modélisé par un front montant sur la courbe C en t=t₁.

La réponse du détecteur suivant l'invention, est en effet plus rapide que celle du détecteur suivant l'art antérieur. Les courbes C₁ et C₂ ont toutes les deux, à partir de t=t₁, des croissances exponentielles. Mais la courbe C₂, correspondant au détecteur suivant l'invention a un taux d'accroissement supérieur à celui de la courbe C₁. Ainsi, la membrane, dans le dispositif de détection suivant l'invention, peut s'échauffer plus rapidement que celle du dispositif détecteur suivant l'art antérieur.

L'exposition à l'énergie rayonnante s'arrête à un temps t=t₂ modélisé par un front descendant sur la courbe C.

Les détecteurs suivant l'art antérieur et suivant l'invention répondent alors à nouveau selon des constantes de temps différentes. Les courbes C₁ et C₂ ont toutes les deux une décroissance exponentielle, mais la courbe C₂ correspondant au détecteur suivant l'invention a un décroissance plus rapide que celle de la courbe C₁. Ainsi, dans le détecteur suivant l'invention, la membrane peut se refroidir plus rapidement que celle du dispositif détecteur suivant l'art antérieur. Le dispositif détecteur suivant l'invention permet donc d'effectuer des mesures à une fréquence plus élevée qu'un dispositif suivant l'art antérieur. Sa vitesse de refroidissement peut être notamment de l'ordre de 5 à 10 fois plus importante que celle des dispositifs de l'art antérieur.

La figure 5 illustre une variante de position que peut adopter le dispositif lors par exemple d'une phase de détection ou d'échauffement. Dans cette position, la membrane 10 ainsi que la couche 11 sont, en phase d'échauffement, en lévitation entre la partie haute 12a et la partie basse 12b du substrat 12. La membrane 10 n'entre en contact avec aucune autre pièce, les plots d'isolation 14 étant alors facultatifs. Son isolation thermique est ainsi encore améliorée par rapport au dispositif de la figure 2A. Le maintien dans cette position peut être assuré par exemple par des moyens d'actionnement électromagnétiques ou électrostatiques (non représentés). Des moyens d'actionnement électrostatiques peuvent être par exemple formés d'électrodes situées sur la membrane 10 et sur le substrat 12, comme dans l'exemple illustré précédemment sur les figures 3A et 3B. Pour produire des forces électrostatiques permettant de maintenir la membrane à distance du substrat, ces électrodes peuvent être fixées à des potentiels égaux et non nuls.

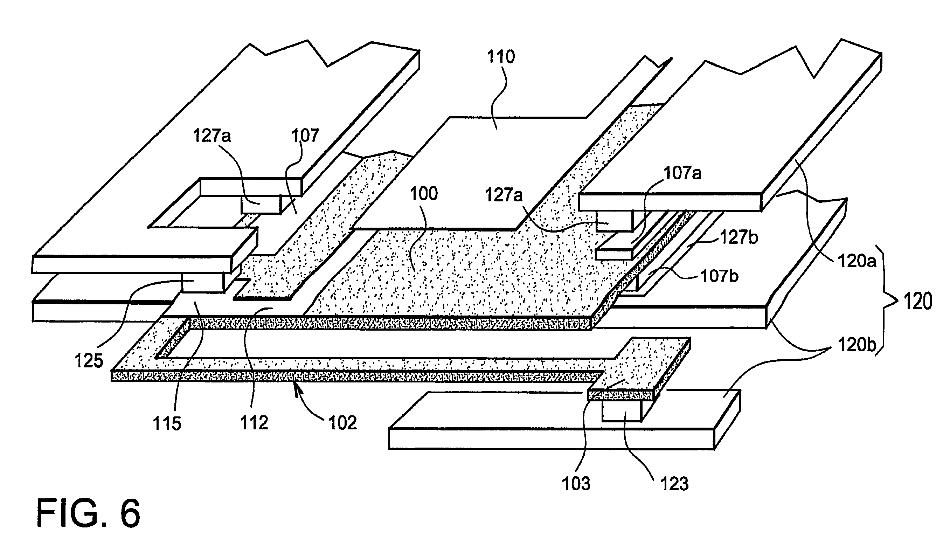

Un exemple plus détaillé de dispositif de détection est illustré selon une vue en perspective et en coupe transversale sur la figure 6. Cet exemple de dispositif peut être intégré à un microsystème électromécanique (MEMS) et être réalisé en couches minces.

Il comprend tout d'abord une membrane 100 permettant d'absorber une énergie rayonnante incidente. Cette membrane 100 a une épaisseur comprise par exemple entre 10 nanomètres et 10 micromètres et peut être formée à base par exemple d'un matériau diélectrique tel que : SiO, SiO₂, SiN, Si₃N₄.

La membrane est recouverte d'une couche mince 110 par exemple semi-conductrice. Cette couche mince 110 permet de convertir une énergie thermique en un ou plusieurs signaux électriques fonction de cette énergie. La membrane 100 est englobée partiellement par un substrat 120 comprenant une partie supérieure 120a située au dessus d'elle et une partie inférieure 120b située au dessous d'elle. Le substrat 120 peut être semi-conducteur et par exemple en silicium. La membrane est munie de moyens de suspension par rapport au substrat, par exemple des pièces oblongues 102 en forme de 'L' rattachées de chaque côté de la membrane 100. Ces pièces 102 disposent de terminaisons 103, par exemple rectangulaires, situées en regard de plots isolants 123 disposés sur la partie inférieure 120b du substrat 120.

La membrane 100 est liée mécaniquement aux au substrat 120, mais elle peut prendre plusieurs positions. Dans une première position, la membrane 100 repose sur les plots isolants 123, par l'intermédiaire des terminaisons 103. Selon une variante, cette première position peut être une position de « repos » de la membrane et ne nécessite pas de forces extérieures à cette dernière pour être maintenue. Selon une autre variante, cette première position peut être maintenue par le biais de forces extérieures à la membrane, par exemple électrostatiques, permettant de la plaquer contre les plots isolants 123

Dans les deux cas, cette position est celle qu'adoptera le dispositif de détection par exemple lorsqu'il effectue une mesure. On appellera cette position : « position d'échauffement ».

Dans la position d'échauffement, la membrane 100 n'est en contact qu'avec les plots isolants 123. Elle se trouve dans une position de haute isolation thermique, qui cumule la résistance thermique des moyens de suspension avec la résistance thermique des contacts ou des plots isolants 123. Ces derniers peuvent être réalisés à base d'un matériau diélectrique, de préférence très bon isolant thermique. Ce matériau peut être un polymère comme par exemple du polyimide, un aérogel ou un diélectrique de faible constante diélectrique (« low-k » selon la terminologie anglo-saxonne).

Sous l'effet d'un rayonnement électromagnétique, la membrane est susceptible de s'échauffer et de transmettre son échauffement à la couche mince 110. Cette couche mince 110 peut comprendre un ou plusieurs thermistors permettant de produire des signaux électriques de mesure, en fonction de l'échauffement de la membrane 100. Des lignes conductrices 112, reliées à la couche mince 110, sont disposées sur la face supérieure de la membrane 100 et permettent de véhiculer les signaux électriques de mesure provenant de la couche 110. Certaines de ces lignes conductrices 112 peuvent également permettre de véhiculer des signaux de polarisation destinés à la couche 110 et provenant par exemple du substrat 120. Les lignes conductrices 112 se terminent en zones conductrices 115 situées en regard de plots conducteurs 125 sur le substrat 120.

La membrane 100 peut adopter une seconde position dans laquelle les plots conducteurs 125, sont connectés aux zones conductrices 115. Cette seconde position sera appelée « position de lecture ». Elle peut permettre par exemple à un circuit électronique intégré au substrat et relié aux plots conducteurs 115, de faire l'acquisition des signaux électriques mesurés.

En « position de lecture », les plots conducteurs peuvent également permettre à la membrane 100 d'évacuer au moins en partie l'énergie thermique qu'elle vient d'emmagasiner, par exemple lors de la phase de détection. Les plots conducteurs 100 ont ainsi, de préférence, une résistance thermique la plus faible possible pour permettre à la membrane de se refroidir rapidement. Ces plots peuvent être formés par exemple à base d'un métal tel que le cuivre, l'argent, le nickel, l'or....

Le passage de la position d'échauffement à la position de lecture peut être réalisé grâce au déplacement vertical de la membrane par rapport aux plots conducteurs 125 du substrat 120. Ce déplacement peut être effectué au moyen d'électrodes d'actionnement capables également de maintenir la membrane dans la position d'échauffement ou dans la position de lecture.

Certaines de ces électrodes d'actionnement notées 107a et 107b sont situées respectivement sur et sous la membrane 100. D'autres notées 127a et 127b sont situées respectivement sur la partie supérieure 127a et sur la partie inférieure 127b du substrat 120. Les électrodes, suivant les potentiels auxquels elles sont réglées, permettent de déplacer la membrane à l'aide de forces électrostatiques ou de maintenir la membrane dans la première ou la seconde position. Les électrodes 107a et 107b de la membrane peuvent être par exemple non polarisées et maintenues à un potentiel V₁ constant de 0 volt. Les électrodes 127a et 127b du substrat 120 peuvent avoir un potentiel V₂ variable en fonction du déplacement que l'on souhaite opérer.

Ces électrodes d'actionnement peuvent être réalisées par exemple à base d'un matériau métallique tel que : TiN, Ti, TiN, Pt, Ag, Au, Cr, Al, ITO (Indium TiN Oxyde), Cu, W, Ni.

Selon une caractéristique particulière du dispositif, des plots conducteurs 125 et des plots isolants 123 d'épaisseurs suffisantes peuvent permettre aux électrodes 107a et 107b de la membrane 100 d'une part et aux électrodes 127a et 127b du substrat 120 de ne pas pouvoir entrer en contact, tout en restant proches l'une de l'autre. Cette caractéristique peut permettre, par exemple lorsque le dispositif est en position de lecture, de maintenir une attraction importante entre les plots conducteurs 125 et les zones conductrices 115. Le contact électrique avec les moyens de lecture, ainsi que le refroidissement de la membrane peuvent être ainsi améliorés.

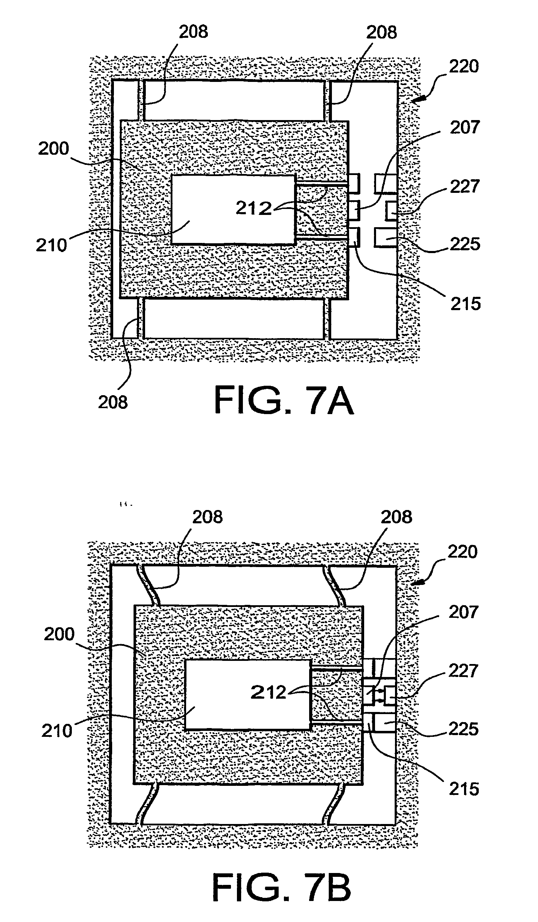

Un exemple de dispositif de détection selon la présente invention, plus simple à réaliser que l'exemple précédent, va à présent être décrit. Il est illustré sur les figures 7A et 7B.

Ce dispositif de détection comprend tout d'abord une membrane 200, semblable à celle du précédent dispositif. Cette membrane est recouverte d'une couche mince 210 permettant de convertir l'énergie rayonnante transmise en un ou plusieurs signaux électriques de mesure.

La membrane 200 est liée mécaniquement à un substrat 220 qui l'entoure. Des moyens de suspension sous forme de tiges 208 relient le substrat 220 et la membrane 200 et maintiennent cette dernière en suspension. Ces tiges 208 sont réalisées à base d'un matériau de préférence souple et isolant tel que par exemple un polymère.

La membrane 200 peut adopter une première position (figure 7A) que l'on nommera « position d'échauffement », par exemple durant une phase de mesure d'une énergie rayonnante incidente. Dans cette première position, la membrane 200 est maintenue en suspension par les tiges 208 et n'a de lien avec le substrat 220 que par le biais des tiges isolantes 208. Ces dernières jouent le rôle d'isolant thermique.

Cette position, est une position de repos dans la mesure où elle ne nécessite pas force extérieure, en dehors du maintien assuré par les tiges, pour être préservée. Dans cette position, la membrane peut s'échauffer en évitant tout contact générateur de fuites thermiques avec des parties conductrices du support 200. Au cours de la détection d'énergie rayonnante, l'échauffement de la membrane 200 est retransmis à la couche 210 qui le transforme en signaux électriques de mesure. Des lignes conductrices 212 reliées à la couche 210 sont disposées sur la surface de la membrane 200 et peuvent permettre notamment de véhiculer les signaux électriques de mesure. Ces lignes 210 aboutissent à des zones conductrices 215 situées sur la tranche de la membrane 200. Les zones conductrices 215 sont en regard de plots conducteurs 225, situés sur le substrat 220, avec lesquels ils sont susceptibles de se connecter.

Une fois la détection terminée, on peut déplacer la membrane 200 dans un plan horizontal et lui faire adopter une seconde position dans laquelle les plots conducteurs 225, sont connectés aux zones conductrices 215 (figure 7B). Cette seconde position, dans laquelle la membrane 200 est en contact avec le substrat 220, peut permettre par exemple à un circuit électronique intégré au substrat 220 (non représenté) de faire l'acquisition des signaux de mesures provenant de la couche 210. Dans la seconde position, les plots conducteurs 225 peuvent servir de moyens de lecture des signaux de mesure. Ils peuvent également permettre de faciliter l'évacuation de l'énergie thermique que la membrane vient d'emmagasiner lors de la détection.

Le déplacement horizontal de la membrane ainsi que le maintien de la membrane dans la seconde position peut être réalisé grâce à des premières électrodes d'actionnement 207 situées sur une tranche de la membrane 200 et à des secondes électrodes d'actionnement 227 situées sur le substrat 220. Les premières électrodes 207 et secondes électrodes 227 d'actionnement sont en regard les unes des autres. En faisant varier leurs potentiels respectifs, on peut faire se déplacer la membrane. Les premières électrodes 207 situées sur la membrane peuvent être par exemple non polarisées et maintenues à un potentiel V₁ constant de O volts. Les électrodes 227 du substrat 220 peuvent elles avoir un potentiel V₂ variable. Lorsque V₂ est placée à un potentiel supérieur à O volt les premières électrodes 207 de la membrane sont alors attirées par les secondes électrodes du substrat 220. La membrane se déplace alors dans un plan horizontal, et vient se plaquer contre les plots conducteurs 225. Elle adopte ainsi la position de lecture (figure 7B).

Avec des moyens d'actionnement électrostatiques, il est possible d'utiliser un effet de « collage » (« sticking » selon la terminologie anglo-saxonne) des électrodes. Cet effet de collage, se produit lorsque des électrodes d'actionnement situées, à une distance initiale et en vis-à-vis les unes des autres, se rapprochent à une autre distance, inférieure au tiers de la distance initiale. Les électrodes ont alors tendance à se coller les unes contre les autres.

Selon une variante, lors de la position de lecture, on peut maintenir les électrodes situées sur la membrane et celles situées sur le substrat, à une distance les unes des autres non nulle et inférieure au tiers de la distance à laquelle elles se trouvaient lors de la position de mesure. On utilise alors l'effet de « collage » précédemment décrit et l'on peut ainsi produire une forte attraction entre les zones conductrices de la membrane et les plots conducteurs du substrat.

Le potentiel des électrodes peut être commandé par exemple par un circuit intégré au substrat 220, à l'aide d'un signal périodique. Dans ce cas il est préférable que la période de ce signal soit choisie de manière à ce que la membrane ne puisse pas entrer en résonance. Cela pourrait perturber le fonctionnement du détecteur et, éventuellement endommager la membrane.

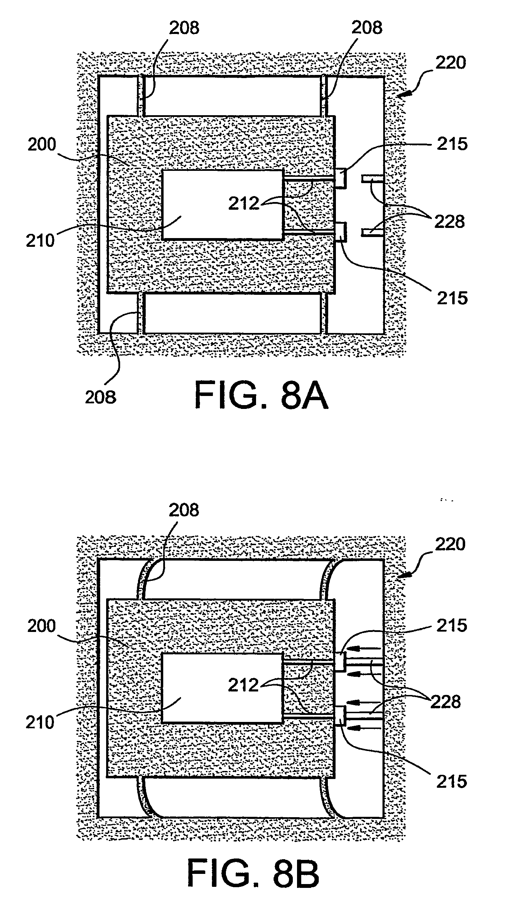

Les figures 8A et 8B illustrent un autre exemple de dispositif de détection selon l'invention. Ce dispositif diffère du précédent notamment au niveau des moyens d'actionnement de la membrane et des moyens de lecture des signaux de mesure.

Les plots conducteurs 225 servant de moyens de lecture sont remplacés par d'autres plots 228 comprenant par exemple un coeur à base d'un matériau piézo-électrique tel que du quartz, recouvert par une fine couche conductrice. Ces plots 228 peuvent s'allonger sous l'action d'une tension électrique provenant par exemple d'un circuit intégré au substrat 220. Dans cet exemple de réalisation, la membrane peut également se déplacer. Le dispositif de détection est également susceptible d'adopter les positions « d'échauffement » et de « lecture » précédemment évoquées. Ces positions sont cette fois réalisées par le déplacement des plots 228 en utilisant l'effet piézo-électrique.

Selon une variante, lors de la position d'échauffement (figure 8A), les plots 228 ne sont soumis à aucun actionnement électrique. Ces derniers n'entrent pas en contact avec les zones conductrices 215 de la membrane 200.

Puis, pour que le dispositif de détection passe en position de lecture, une tension électrique est appliquée sur le matériau piézoélectrique formant le coeur des plots 228. Ces derniers s'allongent alors pour entrer contact avec les zones conductrices 215. La membrane 200 est alors maintenue en suspension mais se déplace grâce aux tiges souples 208 qui se déforment (figure 8B).

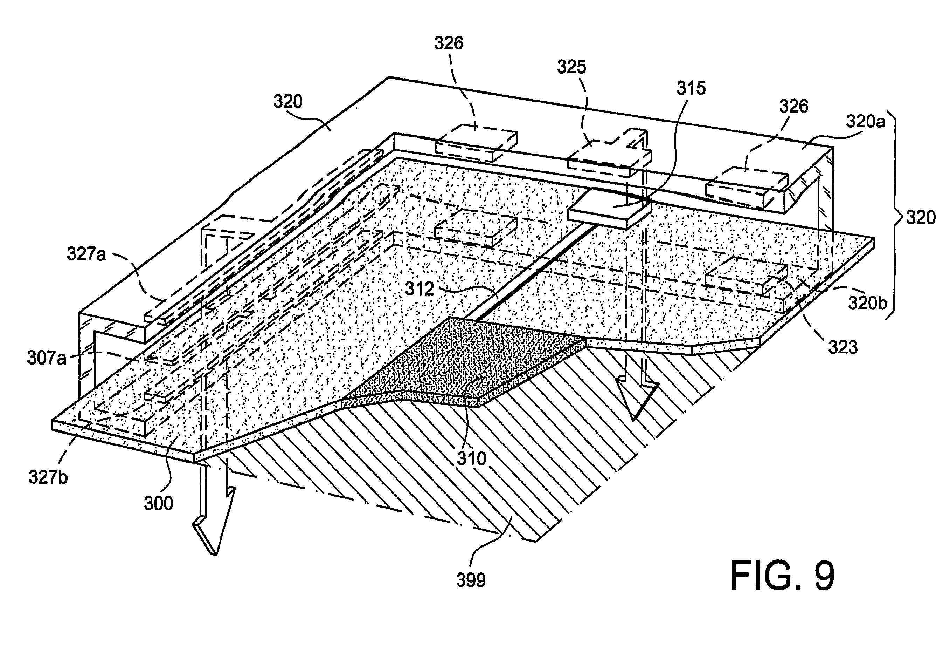

La figure 9 illustre selon une vue en coupe et en perspective, un autre exemple de dispositif de détection semblable à celui illustré sur la figure 6. Il comporte une membrane 300 absorbante de rayons électromagnétiques, recouverte d'une couche semi-conductrice 310 comprenant un ou plusieurs thermistors permettant de produire des signaux électriques de mesure. Des lignes conductrices 312 reliées à la couche 310 aboutissent à des zones 315 de contact permettant de véhiculer des signaux électriques.

Un substrat 320, indépendant de la membrane 300, englobe cette dernière totalement. Ce substrat 320 comprend tout d'abord, une partie inférieure 320b dotée de quatre plots isolants 323 (deux seulement sont représentés). En position d'échauffement, la membrane 300, repose sur ces plots directement. La partie inférieure 320b du substrat 320 est également dotée d'une couche 399, permettant de réfléchir le rayonnement électrique. Cette couche 399, permet d'optimiser l'échauffement de la membrane 300 lors d'une phase d'échauffement.

Le substrat 320 comprend également une partie supérieure dotée de plots conducteurs 325, 326. Certains de ces plots conducteurs, notés 325, servent de moyens de lecture aux signaux électriques de mesure et permettent de refroidir la membrane lorsque le dispositif est en position de « lecture », c'est à dire lorsque la membrane 300 est plaquée contre les plots conducteurs 325, 326.

D'autres plots, notés 326, constituent des zones additionnelles de faible résistance thermique. Ils permettent de favoriser le refroidissement de la membrane 300 lorsque celle-ci est en position de « lecture ».

Comme pour l'exemple de réalisation illustré sur la figure 6, le passage d'une position d'échauffement ou de mesure à une autre position de lecture de la mesure, est obtenu grâce à des électrodes d'actionnement dont certaines 327a et 327b sont situées respectivement sur la parties supérieure 320a et la partie inférieure 320b du subst rat 320. D'autres électrodes 307a et 307b sont situées sur chacune des faces de la membrane 300 (seule celle sur la face supérieure de la membrane est représentée). Suivant les potentiels auxquelles sont réglées chacune de ces électrodes, la membrane sera susceptible de se déplacer ou de se maintenir dans une position de mesure ou dans une position de lecture de la mesure. Dans cet exemple de réalisation, le déplacement de la membrane est, de manière avantageuse, réalisé sans contact avec un autre élément du dispositif.

Des dispositifs tels que ceux illustrés et décrits précédemment peuvent être réalisés en couches minces.

Un exemple de méthode de réalisation du dispositif illustré sur la figure 9 va à présent être décrit.

Le substrat 320 peut être formé à base d'un substrat semi-conducteur. Les électrodes d'actionnement du substrat 320 peuvent être formées par exemple tout d'abord par des méthodes de pulvérisation cathodique, dépôt chimique en phase vapeur ou évaporation. Puis par gravure chimique ou plasma ou méthode « lift-off ».

La membrane peut être réalisée sur une première couche sacrificielle en polyimide d'épaisseur par exemple comprise entre 1 et 5 µm, préférentiellement égale au quart de la longueur d'onde du rayonnement à détecter. Les électrodes situées sur la membrane peuvent être réalisées en même temps que cette dernière.

Ensuite, le dépôt d'une seconde couche sacrificielle, par exemple à base de polyimide, d'épaisseur comprise par exemple entre 0,2 et 5µm est réalisé.

Les plots conducteurs peuvent être réalisés par des techniques classiques de dépôt tel qu'un dépôt chimique en phase vapeur, et de gravure telle qu'une gravure chimique.

Puis, on effectue la gravure, par exemple une gravure sèche des couches sacrificielles, par exemple par micro-ondes, par plasma oxygène afin de libérer la membrane.

Des informations sur ces différentes étapes de procédé peuvent aussi être trouvées dans les documents FR 2 752 299, ou dans l'ouvrage « La pratique du vide et des dépôts de couches minces », par Richardt-Durand aux éditions In Fine, 1995.

## Revendications

1. Dispositif de mesure d'énergie rayonnante, basée sur une détection thermique, comprenant :
- un support comportant des premiers moyens (200) permettant d'absorber une énergie rayonnante et des seconds moyens (210) permettant de fournir un ou plusieurs signaux électriques en fonction de l'énergie rayonnante absorbée,
- un substrat (220) comportant des moyens de lecture (225, 228) desdits signaux électriques,
- des moyens d'actionnement permettant un déplacement du support par rapport au substrat, le déplacement du support étant réalisé horizontalement, dans un plan horizontal parallèle au support.

2. Dispositif selon la revendication 1, les moyens de lecture (225) étant fixes.

3. Dispositif selon la revendication 1, les moyens de lecture (228) étant mobiles.

4. Dispositif selon la revendication 3, les premiers moyens (200) et les moyens de lecture (228) étant mobiles.

5. Dispositif selon l'une des revendications 1 à 4, susceptible d'adopter une position dans laquelle les seconds moyens (210) et les moyens de lecture (225, 228) sont déconnectés des seconds moyens, les seconds moyens n'étant pas reliés électriquement aux moyens de lecture (225, 228).

6. Dispositif selon l'une des revendications 1 à 5, susceptible d'adopter une position dans laquelle, le substrat (220) et le support sont rattachés uniquement par l'intermédiaire de zones isolantes (208) appartenant au support ou/et au substrat.

7. Dispositif selon la revendication 6, le substrat entourant le support.

8. Dispositif selon l'une des revendications 5 à 7, ladite position étant une position dans laquelle le dispositif est apte à effectuer une mesure.

9. Dispositif selon l'une des revendications 5 à 8, la position étant une position dans laquelle les premiers moyens (200) sont aptes à s'échauffer.

10. Dispositif selon l'une des revendications 5 à 9, susceptible d'adopter au moins une autre position dans laquelle les seconds moyens (210) sont reliés électriquement avec les moyens de lecture (225, 228), des zones conductrices (215) du support étant en contact avec les moyens de lecture (225, 228) du substrat, les moyens de lecture (225, 228) étant aptes à faire l'acquisition de signaux électriques provenant des seconds moyens (210).

11. Dispositif selon l'une des revendications 5 à 10, susceptible d'adopter au moins une autre position dans laquelle des zones conductrices (215) du support sont en contact avec d'autres zones conductrices (225, 228) du substrat.

12. Dispositif selon l'une des revendications 5 à 11, susceptible d'adopter au moins une autre position dans laquelle des zones conductrices (215) du support sont en contact avec les moyens de lecture (225, 228) du substrat.

13. Dispositif selon l'une des revendications 10 à 12, l'autre position étant une position dans laquelle les moyens de lecture (13, 125, 225, 228) sont aptes à faire l'acquisition desdits signaux électriques.

14. Dispositif selon l'une des revendications 10 à 13, l'autre position étant une position dans laquelle les premiers moyens ( 200) sont aptes à refroidir.

15. Dispositif selon l'une des revendications 1 à 14, le substrat (220) et le support étant rattachés ou liés mécaniquement.

16. Dispositif selon la revendication 15, le support étant rattaché au substrat (220) par le biais de moyens de suspensions (208).

17. Dispositif selon l'une des revendications 15 ou 16, les moyens de suspension (208) étant souples.

18. Dispositif selon l'une des revendications 16 ou 17, les moyens de suspension (208) étant à base d'un matériau isolant thermique.

19. Dispositif selon l'une des revendications 1 à 18, les moyens d'actionnement permettant de déplacer les premiers moyens (200) par rapport aux moyens de lecture (225, 228).

20. Dispositif selon la revendication 19, les moyens d'actionnement permettant de déplacer le support.

21. Dispositif selon l'une des revendications 1 à 20, les moyens d'actionnement permettant de déplacer les moyens de lecture.

22. Dispositif selon l'une des revendications 1 à 21, les moyens d'actionnement étant au moins en partie thermomécaniques, ou piézoélectriques ou électromagnétiques ou électrostatiques.

23. Dispositif selon l'une des revendications 1 à 22, les moyens d'actionnement comprenant une ou plusieurs électrodes (207, 207) appartenant au support ou/et une ou plusieurs électrodes (227, 227) appartenant au substrat.

24. Dispositif selon l'une des revendications 1 à 23, dans lequel les moyens d'actionnement sont piézoélectriques, les moyens de lecture (228) étant susceptibles de s'allonger pour entrer en contact avec le support.

25. Dispositif selon l'une des revendications 1 à 24, lesdits moyens de lecture étant formés d'un ou plusieurs plots conducteurs (225, 228).

26. Dispositif selon l'une des revendications 1 à 25, le substrat (220) comprenant un ou plusieurs circuits de traitement desdits signaux électriques.

27. Dispositif selon l'une des revendications 1 à 26, le substrat comprenant un ou plusieurs circuits permettant de polariser lesdits seconds moyens.

28. Dispositif selon l'une des revendications 1 à 27, les premiers moyens (200) étant formés d'au moins une couche absorbante de rayons électromagnétiques.

29. Dispositif selon l'une des revendications 1 à 28, les seconds moyens (210) étant formés d'au moins une couche semi-conductrice ou métallique.

30. Dispositif selon la revendication 29, dans lequel les seconds moyens (210) sont formés d'au moins une couche semi-conductrice, la couche semi-conductrice étant accolée ou intégrée aux premiers moyens (200).

31. Dispositif selon l'une des revendications 1 à 30, les seconds moyens comprenant un ou plusieurs thermistors.

32. Dispositif selon l'une des revendications 1 à 31, le substrat comprenant en outre : une couche permettant de réfléchir les rayons électromagnétiques.

33. Dispositif selon l'une des revendications 1 à 32, le substrat (220) étant semi-conducteur.

34. Dispositif selon l'une des revendications 1 à 33, le dispositif de détection d'énergie rayonnante étant réalisé en couches minces.

35. MEMS comprenant le dispositif selon l'une des revendications 1 à 34.

## Claims

1. Device for measuring radiant energy based on the principle of thermal detection, comprising:
- a carrier comprising first means (200) allowing the absorption of radiant energy, and second means (210) enabling the provision of one or more electric signals in relation to the absorbed radiant energy,
- a substrate (220) comprising reading means (225, 228) to read said electric signals,
- actuating means for a displacement of the carrier relative to the substrate, said displacement being horizontal, in a horizontal plane parallel to the carrier.

2. Device for measuring radiant energy as in claim 1, the reading means (225) being fixed.

3. Device for measuring radiant energy as in claim 1, the reading means (228) being mobile.

4. Device for measuring radiant energy as in claim 3, the first means (220) and the reading means (228) being mobile.

5. Device for measuring radiant energy as in any of claims 1 to 4, able to take up a position in which the second means (210) and reading means (225, 228) are disconnected from said second means, said second means not being electrically connected to the reading means (225, 228).

6. Device for measuring radiant energy as in any of claims 1 to 5, able to take up a position in which the substrate (220) and the carrier are connected or attached solely via insulating zones (208) belonging to the carrier or/and the substrate.

7. Device for measuring radiant energy as in claim 6, said substrate surrounding said carrier.

8. Device for measuring radiant energy as in any of claims 5 to 7, said position being a position in which the device is able to take a measurement.

9. Device for measuring radiant energy as in any of claims 5 to 8, the position being a position in which the first means (200) are able to heat.

10. Device for measuring radiant energy as in any of claims 5 to 9, able to take up at least one other position in which the second means (210) are electrically connected to the reading means (225), conducting zones (215) of the carrier being in contact with the reading means (225, 228) of the substrate, said reading means being able to acquire electric signals from said second means (210).

11. Device for measuring radiant energy as in any of claims 5 to 10, able to take up at least one other position in which the conductor zones (215) of the carrier are in contact with other conductor zones (225, 228) of the substrate.

12. Device for measuring radiant energy as in any of claims 5 to 11, able to take up at least one other position in which the conductor zones (215) of the carrier are in contact with the reading means (225, 228) of the substrate.

13. Device for measuring radiant energy as in any of claims 10 to 12, the other position being a position in which the reading means (13, 125, 225, 228) are able to acquire said electric signals.

14. Device for measuring radiant energy as in any of claims 10 to 13, the other position being a position in which the first means (200) are able to cool.

15. Device for measuring radiant energy as in any of claims 1 to 14, the substrate (220) and the carrier being mechanically attached or linked.

16. Device for measuring radiant energy as in claim 15, the carrier being attached to the substrate (220) via suspending means (208).

17. Device for measuring radiant energy as in claim 15 or 16, the suspending means (208) being flexible.

18. Device for measuring radiant energy as in either of claims 16 or 17, the suspending means (208) being in a thermal insulating material.

19. Device for measuring radiant energy as in any of claims 1 to 18, the actuating means enabling displacement of the first means (200) with respect to the reading means (225, 228).

20. Device for measuring radiant energy as in claim 19, the actuating means enabling displacement of the carrier.

21. Device for measuring radiant energy as in either of claims 1 or 20, the actuating means enabling displacement of the reading means.

22. Device for measuring radiant energy as in any of claims 1 to 21, the actuating means being at least partly thermomechanical, or piezoelectric or electromagnetic or electrostatic.

23. Device for measuring radiant energy as in any of claims 1 to 22, the actuating means comprising one or more electrodes (207, 207) belonging to the carrier or/and one or more electrodes (227, 227) belonging to the substrate.

24. Device for measuring radiant energy as in any of claims 1 to 23, wherein the actuating means are piezoelectric, the reading means (228) being able to lengthen to enter into contact with the carrier.

25. Device for measuring radiant energy as in any of claims 1 to 24, said reading means being formed of one or more conductor pads (225, 228).

26. Device for measuring radiant energy as in any of claims 1 to 25, the substrate (220) comprising one or more circuits for processing said electric signals.

27. Device for measuring radiant energy as in any of claims 1 to 26, the substrate comprising one or more circuits enabling polarization of said second means.

28. Device for measuring radiant energy as in any of claims 1 to 27, the first means (200) being formed of at least one absorbing layer of electromagnetic radiation.

29. Device for measuring radiant energy as in any of claims 1 to 28, the second means (210) being formed of at least one semi-conductive or metal layer.

30. Device for measuring radiant energy as in claim 29, wherein the second means (210) are formed of at least one semi-conductive layer, the semi-conductive layer adjoining or being integrated in the first means (200).

31. Device for measuring radiant energy as in any of claims 1 to 30, the second means comprising one or more thermistors.

32. Device for measuring radiant energy as in any of claims 1 to 31, the substrate also comprising: a layer enabling reflection of the electromagnetic rays.

33. Device for measuring radiant energy as in any of claims 1 to 32, the substrate (220) being a semiconductor,

34. Device for measuring radiant energy as in any of claims 1 to 33, the device for detecting radiant energy being made in thin layers.

35. MEMS comprising the device as in any of claims 1 to 34.

## Patentansprüche

1. Strahlungsenergie-Messvorrichtung, auf einer thermischen Detektion basierend, umfassend:
- einen Träger mit ersten Einrichtungen (200), fähig zur Absorption einer Strahlungsenergie, und zweiten Einrichtungen (210), fähig ein oder mehrere elektrische Signale entsprechend der absorbierten Strahlungsenergie zu liefern,
- ein Substrat (220) mit Leseeinrichtungen (225, 228) der genannten elektrischen Signale,
- Betätigungseinrichtungen, um eine Verschiebung des Trägers in Bezug auf das Substrat zu ermöglichen, wobei die Verschiebung des Trägers horizontal erfolgt, in einer zu dem Träger parallelen horizontalen Ebene.

2. Vorrichtung nach Anspruch 1, wobei die Leseeinrichtungen (225) feststehend sind.

3. Vorrichtung nach Anspruch 1, wobei die Leseeinrichtungen (225) beweglich sind.

4. Vorrichtung nach Anspruch 3, wobei die ersten Einrichtungen (200) und die Leseeinrichtungen (228) beweglich sind.

5. Vorrichtung nach einem der Ansprüche 1 bis 4, fähig eine Stellung abzunehmen, in der die zweiten Einrichtungen (210) und die Leseeinrichtungen (225, 228) von den zweiten Einrichtungen getrennt sind, wobei die zweiten Einrichtungen elektrisch nicht mit den Leseeinrichtungen (225, 228) verbunden sind.

6. Vorrichtung nach einem der Ansprüche 1 bis 5, fähig eine Stellung anzunehmen, in der das Substrat (220) und der Träger nur durch isolierende Zonen (208) verbunden sind, die zu dem Träger oder/und dem Substrat gehören.

7. Vorrichtung nach Anspruch 6, wobei das Substrat den Träger umgibt.

8. Vorrichtung nach einem der Ansprüche 5 bis 7, wobei die genannte Stellung eine Stellung ist, in der die Vorrichtung fähig ist, eine Messung durchzuführen.

9. Vorrichtung nach einem der Ansprüche 5 bis 8, wobei die genannte Stellung eine Stellung ist, in der die ersten Einrichtungen (200) sich erwärmen können.

10. Vorrichtung nach einem der Ansprüche 5 bis 9, fähig wenigstens eine andere Stellung anzunehmen, in der die zweiten Einrichtungen (210) elektrisch mit den Leseeinrichtungen (225, 228) verbunden sind, wobei leitfähige Zonen (215) des Trägers Kontakt haben mit Leseeinrichtungen (225, 228) des Substrats und die Leseeinrichtungen (225, 228) fähig sind, von den zweiten Einrichtungen (210) stammende elektrische Signale zu erfassen.

11. Vorrichtung nach einem der Ansprüche 5 bis 10, fähig wenigstens eine andere Stellung anzunehmen, in der leitfähige Zonen (215) des Trägers Kontakt haben mit anderen leitfähigen Zonen (225, 228) des Substrats.

12. Vorrichtung nach einem der Ansprüche 5 bis 1, fähig wenigstens eine andere Stellung anzunehmen, in der leitfähige Zonen (215) des Trägers Kontakt haben mit den Leseeinrichtungen (225, 228) des Substrats.

13. Vorrichtung nach einem der Ansprüche 10 bis 12, wobei die andere Stellung eine Stellung ist, in der die Leseeinrichtungen (13, 125, 225, 228) zur Erfassung der genannten elektrischen Signale fähig sind.

14. Vorrichtung nach einem der Ansprüche 10 bis 13, wobei die andere Stellung eine Stellung ist, in der die ersten Einrichtungen (200) sich abkühlen könnten.

15. Vorrichtung nach einem der Ansprüche 10 bis 14, wobei das Substrat (220) und der Träger zusammenhängen oder mechanisch verbunden sind.

16. Vorrichtung nach Anspruch 15, wobei der Träger durch Aufhängeinrichtungen (208) mit dem Substrat (220) zusammenhängt.

17. Vorrichtung nach einem der Ansprüche 15 oder 16, wobei die Aufhängeinrichtungen (208) nachgiebig sind.

18. Vorrichtung nach einem der Ansprüche 16 oder 17, wobei die Aufhängeinrichtungen (208) aus einem thermisch isolierenden Material sind.

19. Vorrichtung nach einem der Ansprüche 1 bis 18, wobei die Betätigungseinrichtungen ermöglichen, die ersten Einrichtungen (200) in Bezug auf die Leseeinrichtungen (225, 228) zu verschieben.

20. Vorrichtung nach Anspruch 19, wobei die Betätigungseinrichtungen ermöglichen, den Träger zu verschieben.

21. Vorrichtung nach einem der Ansprüche 1 bis 20, wobei die Betätigungseinrichtungen ermöglichen, die Leseeinrichtungen zu verschieben.

22. Vorrichtung nach einem der Ansprüche 1 bis 21, wobei die Betätigungseinrichtungen wenigstens teilweise thermomechanisch oder piezoelektrisch oder elektromagnetisch oder elektrostatisch sind.

23. Vorrichtung nach einem der Ansprüche 1 bis 22, wobei die Betätigungseinrichtungen eine oder mehrere zu dem Träger gehörende Elektroden (207) und/oder eine oder mehrere zu dem Substrat gehörende Elektroden (227) umfassen.

24. Vorrichtung nach einem der Ansprüche 1 bis 23, wobei die Betätigungseinrichtungen piezoelektrisch sind und die Leseeinrichtungen (228) sich verlängern können, um den Kontakt mit dem Träger herzustellen.

25. Vorrichtung nach einem der Ansprüche 1 bis 24, wobei die genannten Leseeinrichtungen durch einen oder mehrere leitfähige Elemente (225, 228) gebildet werden.

26. Vorrichtung nach einem der Ansprüche 1 bis 25, wobei das Substrat (220) einen oder mehrere Schaltungen zur Verarbeitung der genannten elektrischen Signale umfasst.

27. Vorrichtung nach einem der Ansprüche 1 bis 26, wobei das Substrat eine oder mehrere Schaltungen zur Polarisierung der genannten zweiten Einrichtungen umfasst.

28. Vorrichtung nach einem der Ansprüche 1 bis 27, wobei die ersten Einrichtungen (200) durch wenigstens eine - elektromagnetische Strahlung absorbierende - Schicht gebildet werden.

29. Vorrichtung nach einem der Ansprüche 1 bis 28, wobei die zweiten Einrichtungen (210) durch wenigstens eine Halbleiter- oder Metallschicht gebildet werden.

30. Vorrichtung nach Anspruch 29, bei der die zweiten Einrichtungen (210) durch wenigstens eine Halbleiterschicht gebildet werden, wobei die Halbleiterschicht bezüglich der ersten Einrichtungen (200) angefügt oder integriert ist.

31. Vorrichtung nach einem der Ansprüche 1 bis 30, wobei die zweiten Einrichtungen einen oder mehrere Thermistore umfasst.

32. Vorrichtung nach einem der Ansprüche 1 bis 31, wobei das Substrat außerdem umfasst: eine die elektromagnetische Strahlung reflektierende Schicht.

33. Vorrichtung nach einem der Ansprüche 1 bis 32, wobei das Substrat (220) halbleitend ist.

34. Vorrichtung nach einem der Ansprüche 1 bis 33, wobei die Strahlungsenergiedetektionsvorrichtung aus Dünnschichten realisiert wird.

35. MEMS mit der Vorrichtung nach einem der Ansprüche 1 bis 34.
